# EUROPÄISCHE PATENTSCHRIFT

(11) **EP 4 048 561 B1**
(45) Veröffentlichungstag und Bekanntmachung des Hinweises auf die Patenterteilung: **05.11.2025**
(21) Anmeldenummer: 20780661.3
(22) Anmeldetag: 24.09.2020
(51) Int. Cl.: B60S 1/38, B60S 1/52

(54) **WISCHBLATT, INSBESONDERE FÜR EIN KRAFTFAHRZEUG**
WIPER BLADE, IN PARTICULAR FOR A MOTOR VEHICLE
BALAI D'ESSUIE-GLACE, EN PARTICULIER POUR UN VÉHICULE AUTOMOBILE

(30) Priorität: 25.10.2019 DE 102019216430
(43) Veröffentlichungstag der Anmeldung: 31.08.2022
(73) Patentinhaber: Robert Bosch GmbH, 70442 Stuttgart (DE)
(72) Erfinder: RAPP, Harald, 77815 Buehl (DE); GEISSLER, Sascha, 77839 Lichtenau (DE)
(86) Internationale Anmeldenummer: PCT/EP2020/076721
(87) Internationale Veröffentlichungsnummer: WO 2021/078466

(56) Entgegenhaltungen:
- EP-A1- 2 808 208
- EP-A1- 2 876 005
- WO-A1-2009/130183
- DE-A1- 102008 051 397
- DE-U- 1 989 712
- US-A- 3 428 993
- US-A1- 2014 317 873

## Beschreibung

### Stand der Technik

Die Erfindung betrifft ein Wischblatt, insbesondere für ein Kraftfahrzeug, nach Gattung des unabhängigen Anspruchs.

Es sind schon zahlreiche Wischblätter für Kraftfahrzeuge bekannt, die eine Heizeinrichtung mit einem langgestreckten Heizelement aufweisen. Beispielsweise ist aus der aus der DE 10 2005 032 698 A1 bekannt, einen Heizdraht vorzusehen, der in einem äußeren Hohlraum des Scheibenwischergummis angeordnet ist. WO-A-2009/130183 offenbart den Oberbegriff des Anspruchs 1.

Ein derartiges Wischblatt ist in der Fertigung jedoch aufwendig und daher kostenintensiv.

### Offenbarung der Erfindung

### Vorteile der Erfindung

Das erfindungsgemäße Wischblatt mit den Merkmalen des Hauptanspruchs hat den Vorteil, dass das Heizelement mindestens eine Schlaufe aufweist. Dies vereinfacht die Fertigung, so dass ein kostengünstiges Wischblatt hergestellt ist.

Durch die in den Unteransprüchen aufgeführten Maßnahmen ergeben sich vorteilhafte Weiterbildungen und Verbesserungen der im Hauptanspruch angegebenen Merkmale.

Nach der Erfindung ist an einem Ende der Längserstreckung des Wischblatts eine Endkappe vorgesehen und die Schlaufe ist im Bereich der Endkappe angeordnet. Dadurch kann die Heizeinrichtung leicht in das Wischblatt eingezogen werden und darüber hinaus wird die Beheizung des Wischblatts verbessert, was sich auf das Wischbild positiv auswirkt.

Weiterhin ist es als vorteilhaft anzusehen, wenn ein Befestigungsmittel zur Befestigung an einem Wischerarm vorgesehen ist und das Heizelement durch das Befestigungsmittel, insbesondere in einer Schlaufe, verläuft. Hierdurch wird das Befestigungsmittel beheizt, so dass die Wischleistung weiter verbessert wird. Insbesondere bei beweglichen Befestigungen am Wischerarm wird dadurch bei niedrigen Temperaturen die Beweglichkeit aufrechterhalten, wodurch sich das Wischbild verbessert.

Besonders vorteilhaft ist es, wenn mindestens eine Flüssigkeitsführung mit mindestens einer Austrittsöffnung vorgesehen ist und die Schlaufe im Bereich der Austrittsöffnung angeordnet ist. Auf diese Weise ergibt sich eine optimale Beheizung der Austrittsöffnung durch welche die Reinigungsflüssigkeit auf die Scheibe aufgebracht wird, bzw. in das Wischblatt eintritt.

Hierbei ist es von besonderem Vorteil, wenn die Schlaufe die Austrittsöffnung zumindest teilweise umschlingt. Dadurch wird die Heizleistung weiter verbessert.

Nach der Erfindung ist das Heizelement vorteilhafterweise als Heizdraht ausgebildet.

Besonders einfach und kostengünstig und daher vorteilhaft ist die Wischleiste im Extrudierverfahren hergestellt, wobei das Heizelement stoffschlüssig in der Wischleiste gehalten ist. Dadurch ergibt sich darüber hinaus ein guter Kontakt zwischen Heizeinrichtung und Wischleiste, was die Wischleistung weiter verbessert.

Eine gute Heizleistung wird insbesondere dadurch erzielt, dass die Schlaufe einen Schlaufenwinkel aufweist der größer als 180 beträgt.

### Beschreibung der Zeichnungen

Verschiedene Ausführungsbeispiele der Erfindung sind in den Zeichnungen dargestellt und in der nachfolgenden Beschreibung näher erläutert. Es zeigen:
Figur 1
   ein erfindungsgemäßes Wischblatt in einer schematischen Seitenansicht,
Figur 2
   einen Querschnitt durch ein erfindungsgemäßes Wischblatt in einer schematischen Darstellung,
Figur 3
   den Endbereich eines erfindungsgemäßen Wischblatts mit Endkappe in einer schematischen Darstellung und
Figur 4
   den Bereich des Befestigungsmittels eines erfindungsgemäßen Wischblatts in schematischer Darstellung.

### Beschreibung der Ausführungsbeispiele

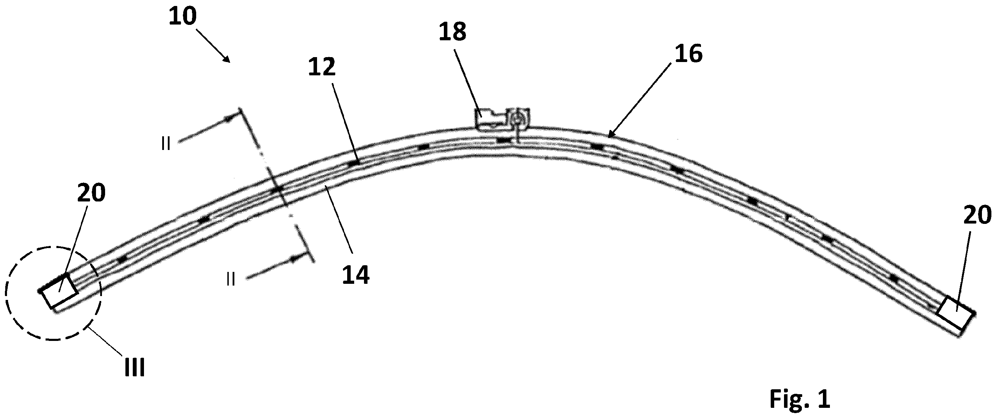

In Figur 1 ist eine Seitenansicht eines erfindungsgemäßen Wischblatts 10 in schematischer Darstellung gezeigt.

Das Wischblatt 10 umfasst eine Federschiene 12, an der eine Wischleiste 14 befestigt ist. Auf der der Wischleiste 14 abgewandten Seite der Federschiene 12 ist eine Windabweisleiste 16 angeordnet. Etwa mittig in Bezug auf die Längserstreckung des Wischblatts 10 ist ein Befestigungsmittel 18 angeordnet, dass zur Befestigung des Wischblatts 10 an einem hier aus Übersichtlichkeitsgründen nicht gezeigten Wischarm dient.

An den Enden der Längserstreckung des Wischblatts 10 ist weiterhin jeweils eine Endkappe 20 angeordnet, die das Wischblatt 10 im Hinblick auf seine Längserstreckung abschließt.

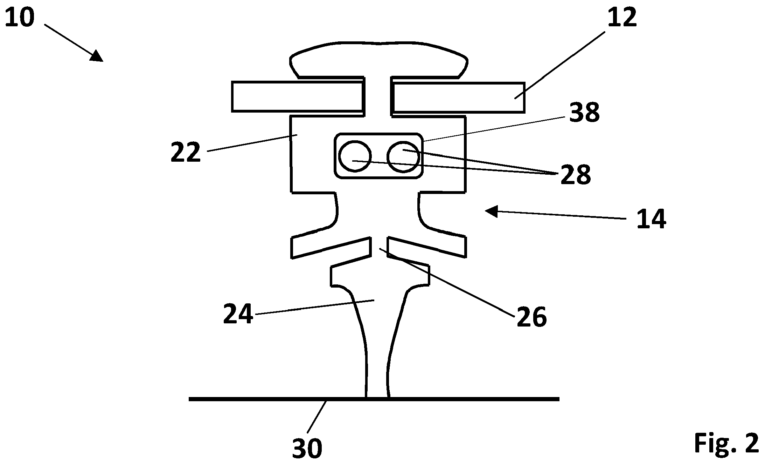

In Figur 2 ist ein Querschnitt durch ein erfindungsgemäßes Wischblatt 10 gezeigt. Die Wischleiste 14 weißt zwei Abschnitte auf, und zwar einen ersten Befestigungsabschnitt 22, mit dem die Wischleiste 14 an der Federschiene 12 befestigt ist. Auf der der Federschiene 12 abgewandten Seite ist eine Wischlippe 24 angeordnet, die über einen Kippsteg 26 am Befestigungsabschnitt 22 befestigt ist. Im Befestigungsabschnitt 22 ist im Innern ein Heizelement 28 als Heizeinrichtung angeordnet, welches im Wesentlichen aus einem Heizdraht besteht. Das Heizelement 28 ist somit langgestreckt und biegsam ausgebildet.

In montierter Position am Kraftfahrzeug liegt die Wischlippe 24 auf einer Scheibe 30 des Kraftfahrzeugs auf.

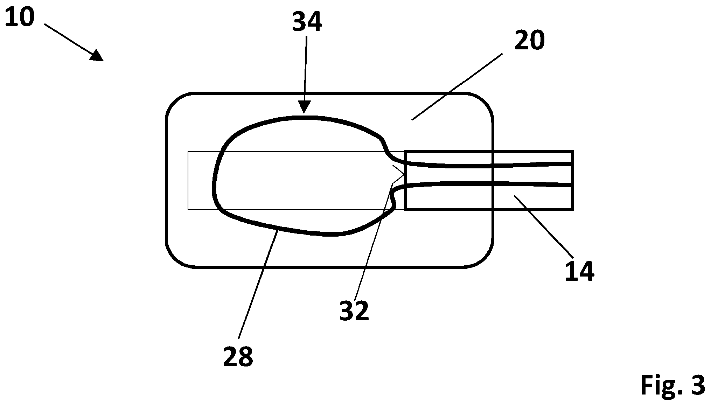

In Figur 3 ist das Ende der Längserstreckung eines erfindungsgemäßen Wischblatts 10 mit der Endkappe 20 gezeigt. Am Ende der Längserstreckung der Wischleiste 14 tritt das Heizelement 28 an einer Stirnseite 32 der Wischleiste 14 aus und ist in einer Schlaufe 34 geführt, beziehungsweise als Schlaufe 34 ausgebildet. Die Schlaufe 34 ist hierbei als o-förmige Schlinge ausgebildet, so dass das als Heizdraht ausgebildete Heizelement 28 bildlich gesprochen aus der Stirnseite 32 der Wischleiste 14 austritt, eine etwa o- oder ringförmige Schlinge in der Endkappe 20 vollführt und wiederum in die Stirnseite 32 der Wischleiste 14 eintritt. In der Fertigung wird der Heizdraht um 180 Grad abgebogen, so daß eine U-förmige Schlaufe entsteht, was einem Schlaufwinkel von 180 Grad entspricht. Diese U-förmige Schlaufe ergibt dann einen Doppeldraht, der durch die Wischleiste 14 gezogen wird. Dadurch ist die Schlaufe 34 an einem Ende der Längserstreckung der Wischleiste 14 angeordnet. Anschließend kann die U-förmige Biegestelle noch aufgebogen werden, so daß sich eine O-Form oder eine etwa ringförmige Schlaufe ergibt, was dann einem Schlaufwinkel von 360 Grad entspricht.

Nach der Erfindung weist das Heizelement 28 auch mehrere Schlaufen 34 an dieser Stelle auf, so dass die Heizleistung im Bereich der Endkappe 20 noch weiter erhöht wird.

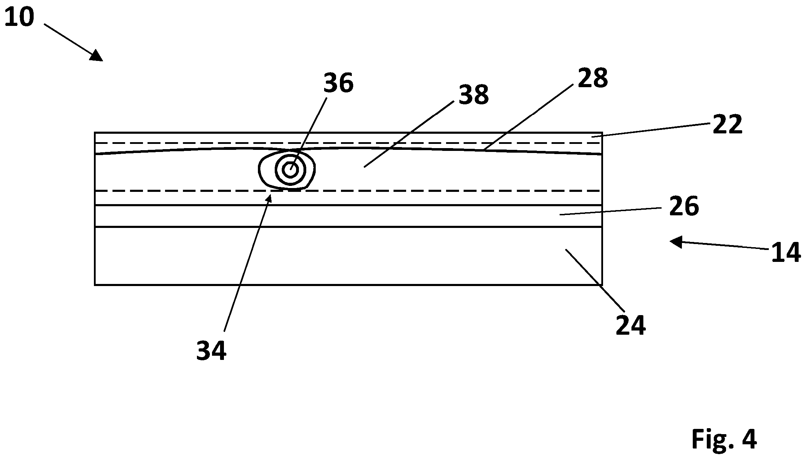

In Figur 4 ist eine Seitenansicht eines Abschnitts eines erfindungsgemäßen Wischblatts 10 gezeigt. Im Befestigungsabschnitt 22 der Wischleiste 14, ist eine Flüssigkeitsführung 38 vorgesehen, innerhalb derer das Heizelement 28 verläuft. Der Befestigungsabschnitt 22 ist über den Kippsteg 26 mit der Wischlippe 24 verbunden.

Die Flüssigkeitsführung 38 ist als Hohlkanal ausgebildet und weist eine Austrittsöffnung 36 auf, die als Austrittsdüse ausgebildet ist, so dass die Reinigungsflüssigkeit aus der Flüssigkeitsführung 38 über die Austrittsöffnung 36 in Richtung der Wischlippe 24 abgegeben werden kann. Das als Heizdraht ausgebildete Heizelement 28 ist hierbei in der Flüssigkeitsführung 38 geführt und umschlingt die Austrittsöffnung 36 in Form einer Schlaufe 34. Dadurch wird die Heizleistung des Heizelements 38 im Bereich der Austrittsöffnung 36 erhöht.

In einer Variation der Erfindung kann, wie im Bereich der Endkappe 20 (Figur 3) auch, die Schlaufe 34 auch mehrere Umläufe aufweisen um die Heizleistung in diesen Bereich noch weiter zu erhöhen.

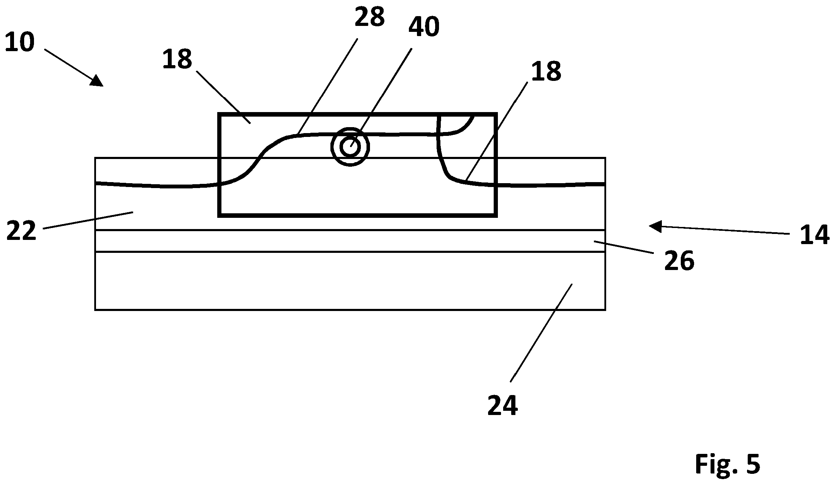

In Figur 5 ist eine schematische Seitenansicht des erfindungsgemäßen Wischblatts 10 im mittleren Bereich beim Befestigungselement 18 gezeigt. Die Heizeinrichtung 28 läuft, wie in den vorangegangenen Zeichnungen, im Bereich des Befestigungsabschnitts 22 und läuft durch das Befestigungselement 18 hindurch, um auch dieses zu erwärmen. Auch hier kann eine Schlaufe 34, die hier aus Gründen der Übersichtlichkeit nicht gezeichnet ist, verlaufen. Um die Heizleistung zu verstärken. Das Befestigungselement 18 ist typischerweise als Kunststoffspritzgussteil ausgebildet, kann jedoch auch als Metallteil ausgebildet sein. Es ist an der hier aus Übersichtlichkeitsgründen nicht gezeichneten Federschiene 12 und am Befestigungsabschnitt 22 gehaltert. Da das Befestigungselement 18 drehbeweglich mit dem Wischerarm befestigt sein soll, weist das Befestigungselement 18 ein Scharnierelement 40 auf, welches als Bohrung für einen Stift, der am Wischerarm angeordnet ist, oder ein Bolzen ausgebildet sein kann. Da ein Festfrieren des Scharnierelements unerwünscht ist, ist das Heizelement 28 nahe am Scharnierelement 40 geführt. Darüber hinaus kann das Heizelement 28 auch eine Schlaufe 34 um das Scharnierelement 40 bilden um an dieser kritischen Stelle die Heizleistung zu erhöhen.

In einer Variation der Erfindung kann die Heizeinrichtung 18 auch anstatt im Befestigungsabschnitt 22 in der Wischlippe 24 geführt sein. Weiterhin kann die Flüssigkeitsführung 38 auch außerhalb des Befestigungsabschnitts 22 angeordnet sein, so dass die Heizeinrichtung 28 mit der Schlaufe 34 dann nicht im Befestigungsabschnitt 22, sondern in der Flüssigkeitsführung 38 vorgesehen ist, so dass auch die Schlaufe 34, aufgrund der Anordnung der Austrittsöffnungen 36 in der Flüssigkeitsführung 38 vorgesehen ist.

Bei der Fertigung eines erfindungsgemäßen Wischblatts wird also zunächst die Wischleiste 14 in einem Extrudierverfahren hergestellt und sodann an der Federschiene 12 befestigt. In diesem so entstandenen Rohling wird dann die Heizeinrichtung 18 in einfacherweise eingezogen und dabei in Schlaufen durch die entsprechenden Stellen, wie Austrittsöffnung 36, Endkappe 20 oder/und Befestigungselement 28, geführt.

## Patentansprüche

1. Wischblatt (10), insbesondere für ein Kraftfahrzeug, umfassend eine Federschiene (12), an der eine Wischleiste (14) befestigt ist und eine Heizeinrichtung mit einem langgestreckten Heizelement (28), wobei das Heizelement (28) mindestens eine Schlaufe (34) aufweist, wobei an den Enden der Längserstreckung des Wischblatts weiterhin jeweils eine Endkappe (20) angeordnet ist, die das Wischblatt im Hinblick auf seine Längserstreckung abschließt, **dadurch gekennzeichnet, dass** die Schlaufe (34) hierbei als o-förmige Schlinge ausgebildet ist, so dass das als Heizdraht ausgebildete Heizelement (28) aus einer Stirnseite (32) der Wischleiste (14) austritt, eine etwa o- oder ringförmige Schlinge in der Endkappe (20) vollführt und wiederum in die Stirnseite (32) der Wischleiste (14) eintritt, wobei das Heizelement mehrere Schlaufen an dieser Stelle aufweist, so dass die Heizleistung im Bereich der Endkappe noch weiter erhöht wird.

2. Wischblatt (10) nach einem der vorhergehenden Ansprüche, **dadurch gekennzeichnet, dass** ein Befestigungsmittel (18) zur Befestigung an einem Wischerarm vorgesehen ist und das Heizelement (28) durch das Befestigungsmittel (18), insbesondere in einer Schlaufe (34), hindurch verläuft.

3. Wischblatt (10) nach einem der vorhergehenden Ansprüche, **dadurch gekennzeichnet, dass** mindestens eine Flüssigkeitsführung (38) mit mindestens einer Austrittsöffnung (36) vorgesehen ist und mindestens eine Schlaufe (34) im Bereich der Austrittsöffnung (36) angeordnet ist.

4. Wischblatt (10) nach Anspruch 3, **dadurch gekennzeichnet, dass** die Schlaufe (34) die Austrittsöffnung (36) zumindest teilweise umschlingt.

5. Wischblatt (10) nach einem der vorhergehenden Ansprüche, **dadurch gekennzeichnet, dass** eine extrudierte Wischleiste (14) vorgesehen ist und das Heizelement (28) stoffschlüssig in der Wischleiste (14) gehalten, insbesondere einextrudiert, ist.

6. Wischblatt (10) nach einem der vorhergehenden Ansprüche, **dadurch gekennzeichnet, dass** die Schlaufe (34) einen Schlaufwinkel aufweist, der größer als 180 Grad beträgt.

## Claims

1. Wiper blade (10), in particular for a motor vehicle, comprising a spring rail (12), which is fastened to a wiper strip (14), and a heating device with an elongate heating element (28), wherein the heating element (28) has at least one loop (34), wherein furthermore a respective end cap (20) is arranged at the ends of the longitudinal extent of the wiper blade and terminates the wiper blade with regard to its longitudinal extent, **characterized in that** the loop (34) is in the form of an O-shaped loop, such that the heating element (28) in the form of a heating wire exits an end side (32) of the wiper strip (14), performs an approximately O-shaped or annular loop in the end cap (20) and enters the end side (32) of the wiper strip (14) again, wherein the heating element has a plurality of loops at this location, such that the heating power in the region of the end cap is even further increased.

2. Wiper blade (10) according to one of the preceding claims, **characterized in that** a fastening means (18) is provided for fastening to a wiper arm and the heating element (28) runs through the fastening means (18), in particular in a loop (34).

3. Wiper blade (10) according to one of the preceding claims, **characterized in that** at least one liquid guide (38) having at least one outlet opening (36) is provided and at least one loop (34) is arranged in the region of the outlet opening (36).

4. Wiper blade (10) according to Claim 3, **characterized in that** the loop (34) at least partially loops around the outlet opening (36).

5. Wiper blade (10) according to one of the preceding claims, **characterized in that** an extruded wiper strip (14) is provided and the heating element (28) is held in a materially bonded manner in the wiper strip (14), in particular is extruded therein.

6. Wiper blade (10) according to one of the preceding claims, **characterized in that** the loop (34) has a looping angle which is greater than 180 degrees.

## Revendications

1. Balai d'essuie-glace (10), notamment pour un véhicule automobile, comprenant un rail flexible (12), sur lequel une lame d'essuyage (14) est fixée et un dispositif de chauffage avec un élément chauffant (28) allongé, l'élément chauffant (28) comportant au moins un nœud coulant (34), un capuchon d'extrémité (20), qui termine la lame d'essuyage au regard de son extension longitudinale, étant disposé respectivement par ailleurs sur les extrémités de l'extension longitudinale de la lame d'essuyage, **caractérisé en ce que** le nœud coulant (34) est réalisé sous la forme d'une boucle en forme de o de telle sorte que l'élément chauffant (28) réalisé comme un fil chauffant sort d'un côté frontal (32) de la lame d'essuyage (14), forme une boucle à peu près en forme de o ou d'anneau dans le capuchon d'extrémité (20) et entre à nouveau dans le côté frontal (32) de la lame d'essuyage (14), l'élément chauffant comportant à cet endroit plusieurs nœuds coulants de telle sorte que la puissance de chauffage est encore augmentée dans la zone du capuchon d'extrémité.

2. Balai d'essuie-glace (10) selon l'une quelconque des revendications précédentes, **caractérisé en ce qu'**un moyen de fixation (18) est prévu pour être fixé sur un bras d'essuie-glace et l'élément chauffant (28) s'étend à travers le moyen de fixation (18), en particulier dans un nœud coulant (34).

3. Balai d'essuie-glace (10) selon l'une quelconque des revendications précédentes, **caractérisé en ce qu'**au moins un système de guidage de liquide (38) avec au moins une ouverture de sortie (36) est prévu et au moins un nœud coulant (34) est disposé dans la zone de l'ouverture de sortie (36).

4. Balai d'essuie-glace (10) selon la revendication 3, **caractérisé en ce que** le nœud coulant (34) entoure au moins en partie l'ouverture de sortie (36).

5. Balai d'essuie-glace (10) selon l'une quelconque des revendications précédentes, **caractérisé en ce qu'**une lame d'essuie-glace (14) extrudée est prévue et l'élément chauffant (28) est maintenu, en particulier est extrudé, par liaison de matière dans la lame d'essuie-glace (14).

6. Balai d'essuie-glace (10) selon l'une quelconque des revendications précédentes, **caractérisé en ce que** le nœud coulant (34) présente un angle de nœud coulant, qui est supérieur à 180 degrés.
